# EUROPÄISCHE PATENTSCHRIFT

(11) **EP 0 615 932 B1**
(45) Veröffentlichungstag und Bekanntmachung des Hinweises auf die Patenterteilung: **14.05.1997**
(21) Anmeldenummer: 94102771.6
(22) Anmeldetag: 24.02.1994
(51) Int. Cl.: B65G 47/22, B65H 15/02

(54) **Förderer zum Überführen von Büchern, Blocks o. dgl. in eine gedrehte neue Lage**
Transfer apparatus for books, blocks or the like into a new orientation
Appareil de transfert pour livres, blocs ou similaires dans une nouvelle orientation

(30) Priorität: 18.03.1993 DE 4308601
(43) Veröffentlichungstag der Anmeldung: 21.09.1994
(73) Patentinhaber: Kolbus GmbH & Co. KG, D-32369 Rahden (DE)
(72) Erfinder: Rathert, Horst, D-32425 Minden (DE); Staudinger, Reimar, D-32425 Minden (DE)

(56) Entgegenhaltungen:
- DE-A- 2 205 153
- DE-A- 2 935 263
- DE-A- 3 321 583
- DE-A- 3 321 584
- DE-B- 2 343 856

## Beschreibung

Die Erfindung betrifft einen Förderer zum Überführen von Büchern, Blocks, Broschuren, Lagenstapeln, Blockstapeln o. dgl. in eine gedrehte neue Lage, vorzugsweise angeordnet vor einem Stapler, mit einer die Produkte einspannenden Dreheinrichtung zum selektiven Drehen um 180°.

Beim Stapeln und Palettieren von Büchern, Blocks o. dgl., einzeln oder stapelweise, wird zum Ausgleich der Rückensteigung ein Verdrehen der Produkte oder Produktgruppen zueinander um 180° im Hinblick auf das Bilden von kippstabilen Stapeln gefordert.

Die Erfindung nimmt Bezug auf die DE-OS 29 35 263, aus der eine automatische Buchstapelmaschine zum Stapeln von Buchblocks in Form von losen, noch nicht gebundenen Lagen bekannt ist, mit einer vorgeschalteten Einrichtung zum selektiven Drehen der Buchblocks. Diese befindet sich zwischen einem Zu- und Abförderer und wird von einer Gruppe von oberen und unteren paarweise zusammenwirkenden Haltestempeln an synchron umlaufend angetriebenen oberen und unteren Förderern gebildet. Die Haltestempel sind drehbar an den Förderern gelagert und lassen sich über Federkraft zum mittigen Klemmen eines Buchblocks zusammenführen sowie während ihres Durchlaufs über eine Drehsteuerung wahlweise um 180° drehen. Zur Übernahme eines Buchblocks von dem Zuförderer sowie zur Abgabe an den Abförderer durchgreifen die unteren Haltestempel die aus einzelnen abständig zueinander liegenden Bändern gebildeten Förderer. Mit Hilfe einer solchen Dreheinrichtung lassen sich Bücher oder Buchblocks, einzeln oder stapelweise, mit in entgegengesetzten Richtungen weisenden Rücken der nachgeordneten Stapeleinrichtung zuführen.

Ersichtlich verlangt die Dreheinrichtung gemäß der DE-OS 29 35 263 mit ihrer Vielzahl an getrennten Kettensystemen umlaufend angetriebenen und gesteuerten Haltestempeln nicht nur einen außerordentlich hohen maschinenbaulichen Aufwand und infolgedessen hohe Gestehungskosten, sie beansprucht zudem einen großen Platzbedarf.

Ferner ist aufgrund von Synchronisationsschwierigkeiten eine Fluchtung der Achsen zusammenwirkender Haltestempel nicht dauerhaft gewährleistet, was dazu führen kann, daß die Ausrichtung einzelner oder gestapelter Bücher oder Buchblocks, insbesondere die Ausrichtung noch nicht miteinander verbundener gestapelter Lagen zueinander verloren geht.

Letztlich benötigt die Dreheinrichtung einen hohen steuerungstechnischen Aufwand für die Zufuhr der Produkte von dem Rückhalteanschlag am Zuförderer bis zur Klemmstelle in der Dreheinrichtung im Hinblick auf das erforderliche Erfassen unterschiedlicher Produktformate im jeweiligen Schwerpunkt.

Die Aufgabe der Erfindung besteht darin, einen Förderer der gattungsgemäßen Art zu schaffen, der bei hoher Taktfolge ein funktionssicheres Drehen von Büchern, Blocks, Broschuren, Lagenstapeln, Blockstapeln o. dgl. auf engstem Raum gewährleistet. Darüber hinaus soll sich der Förderer durch eine verhältnismäßig einfache Bauweise auszeichnen.

Erfindungsgemäß wird die Aufgabe durch den kennzeichnenden Teil des Anspruchs 1 gelöst. Weitere vorteilhafte Ausgestaltungen ergeben sich aus den Unteransprüchen.

Die mit der Erfindung erzielten Vorteile ergeben sich aus der kompakten und kostengünstig herzustellenden Bauweise des Förderers mit lediglich einer ortsgebundenen Klemm- und Dreheinrichtung. Bereits während des Einlaufs der Produkte beginnt die 180°-Drehbewegung, was eine hohe Taktfolge begünstigt. Die zu drehenden Bücher oder Buchblocks sind während der Beschleunigungs-und Verzögerungsphase auf ihrer Gesamtfläche kraftschlüssig gehalten. Der Beginn der Verzögerung wurde dabei so gelegt, daß in der 90°-Stellung der Klemm-und Dreheinrichtung der Schwerpunkt der Produkte über der Drehachse liegt. Bedingt hierdurch läßt sich eine 180°-Drehung bei hoher Taktfolge unter Beibehaltung der seitlichen Ausrichtung sicherstellen.

Die Erfindung soll beispielsweise anhand der einzigen perspektivischen Zeichnung näher erläutert werden.

Der Förderer gemäß der Erfindung zum Überführen von Büchern, Blocks, Broschuren, Lagenstapeln, Blockstapeln o. dgl., einzeln oder gestapelt, selektiv in eine um 180° gedrehte neue Lage weist eine Dreheinrichtung auf mit einem um eine Vertikalachse 2 drehbaren Klemmförderer 1, dem die Produkte A von einem vorgeordneten Bandförderer 3 unter Anlage an einer senkrechten Anschlagschiene 4 in beliebigen Abständen, jedoch in eines Mindestabstand zueinander zugeführt werden. Der Klemmförderer 1 befindet sich an einem Tragrahmen 13 und wird von einem um Umlenkrollen 5 und 6 mit dem Bandförderer 3 synchron umlaufend angetriebenen unten liegenden Zahnriemen 7 mit einem zwischen seitlichen halbkreisförmigen Auflageflächen 8 und 9 verlaufenden Arbeitstrum sowie aus einer Anzahl oben liegender in einem Konstruktionsteil 14 frei drehbar gelagerter Rollen 10 gebildet.

Das Konstruktionsteil 14 ist auf vertikalen Führungsstangen 11, 11a und 12, 12a des Tragrahmens 13 nach oben hin frei verschiebbar sowie nach unten hin durch einen auf einer vertikalen Stange 15 des Tragrahmens 13 positionierbaren, der Höhe des Produktes A entsprechenden Anschlag 16 in seiner Bewegung begrenzt, indem sich ein auf der Stange 15 verschiebbar geführter Ausleger 17 des Konstruktionsteiles 14 auf dem Anschlag 16 abstützt. Das kraftschlüssige Einspannen der Produkte A im Klemmförderer 1 erfolgt somit durch Druckausübung des sich durch Eigengewicht auf die Produkte A legenden frei nach oben verschiebbaren Konstruktionsteiles mit seinen Rollen 10.

Da die oben liegenden frei drehbaren Rollen 10 nicht angetrieben sind, ist zur Einführung der Produkte A eine drehangetriebene dem Bandförderer 3 zugeordnete gemäß Pfeilrichtung absenk- und anhebbare Andrückwalze 18 vorgesehen. In einer abgewandelten Ausführung können die oben liegenden Rollen 10 drehangetrieben sein und mit dem Zahnriemen 7 synchron laufen. Dabei gelangt die Andrückwalze 18 in Fortfall.

Ist das Produkt A weit genug in den Klemmförderer 1 eingelaufen, so beginnt dieser mit der 180°-Drehung. Nach Drehbeginn verzögert der Zahnriemen 7 seine Umlaufgeschwindigkeit bis zum Stillstand, der Klemmförderer 1 befindet sich nun in der 90°-Stellung. Danach wird der Klemmförderer 1 mit entgegengesetzter Drehrichtung angetrieben und in die 180°-Stellung weitergedreht. Bei Erreichen der 180°-Drehung verläßt das Produkt A den Klemmförderer 1 mit hoher Geschwindigkeit und der Zahnriemen 7 hat wieder die richtige, das Einlaufen eines nachfolgenden Produktes ermöglichende Laufrichtung.

Der Beginn der Verzögerung der Umlaufgeschwindigkeit des Zahnriemens 7 wurde erfindungsgemäß so gelegt, daß in der 90°-Stellung der Dreheinrichtung der Schwerpunkt des Produktes über der Drehachse liegt. Die Steuerung von Andrückwalze 18, Antrieb des Zahnriemens 7 und Drehbewegung des Klemmförderers 1 erfolgt über einen Reflextaster 20 durch Abfragung der Vorderkante des einlaufenden Produktes A.

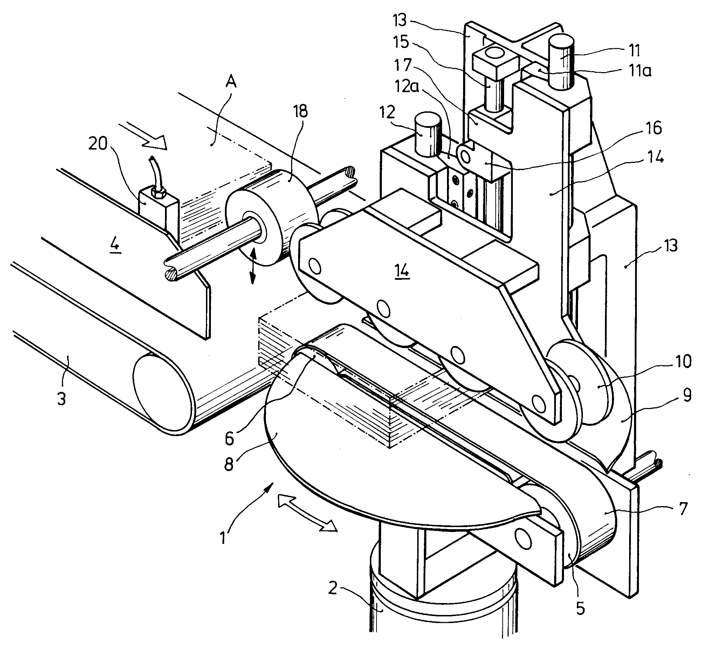

## Patentansprüche

1. Förderer zum Überführen von Büchern, Blocks, Broschuren, Lagenstapeln, Blockstapeln o. dgl. in eine gedrehte neue Lage, vorzugsweise angeordnet vor einem Stapler, mit einer die Produkte einspannenden Dreheinrichtung zum selektiven Drehen um 180°, dadurch gekennzeichnet, daß ein die Produkte (A) kraftschlüssig von einem Zuförderer (3, 18) übernehmender sowie um eine Vertikalachse (2) um 180° drehbarer Klemmförderer (1) vorgesehen ist, dessen Förderbewegung bis zum Stillstand abbremsbar und derart auf die Drehbewegung abgestimmt ist, daß bei Beendigung des Abbremsens der Schwerpunkt des Produktes (A) über der Drehachse in der 90°-Stellung des Klemmförderers (1) liegt, daß die Förderbewegung des Klemmförderers (1) nach dem Stillstand reversibel und der Klemmförderer (1) in die 180°-Stellung weiterdrehbar ist und daß Mittel (20) zum Steuern der Förder- und Drehbewegung des Klemmförderers (1) vorgesehen sind.

2. Förderer nach Anspruch 1, dadurch gekennzeichnet, daß der Klemmförderer (1) und der Zuförderer (3, 18) mit gleicher Fördergeschwindigkeit antreibbar sind.

3. Förderer nach Anspruch 1 oder 2, dadurch gekennzeichnet, daß der Klemmförderer (1) aus einem unteren umlaufend antreibbaren Transportriemen (7) und einer oberen Anordnung frei drehbarer Rollen (10) gebildet ist, wobei diese in einem nach oben frei verschiebbaren Konstruktionsteil (14) gelagert sind.

4. Förderer nach Anspruch 3, dadurch gekennzeichnet, daß der Transportriemen (7) und das die Rollen (10) tragende Konstruktionsteil (14) von einem gemeinsamen um eine Achse (2) drehbaren Tragrahmen (13) aufgenommen sind.

5. Förderer nach Anspruch 3 oder 4, dadurch gekennzeichnet, daß die lotrechte Bewegung des Konstruktionsteils (14) mit den Rollen (10) nach unten hin über Positioniermittel (15-17) der jeweiligen Höhe des Produktes (A) entsprechend begrenzbar ist.

6. Förderer nach Anspruch 1 bis 5, dadurch gekennzeichnet, daß dem Klemmförderer (1) ein Bandförderer (3) mit einer oberen über Steuermittel (20) absenk- und anhebbaren drehantreibbaren Andrückwalze (18) vorgeordnet ist.

7. Förderer nach Anspruch 3 bis 6, dadurch gekennzeichnet, daß der untere Transportriemen des Klemmförderers (1) als Zahnriemen (7) ausgebildet ist, dessen Arbeitstrum zwischen seitlichen halbkreisförmigen Auflageblechen (8, 9) verläuft.

## Claims

1. A conveying apparatus for transferring books, blocks, brochures, stacks of sections, stacks of blocks or similar products to a new, rotated position, preferably located in front of a stacker, said conveying apparatus having a rotation device which clamps the products in order to effect selective rotation through 180°, wherein a gripping conveyor (1) is provided, which acquires the products (A) from a feeding conveyor (3, 18) by means of frictional adhesion, and which can be rotated through 180° about a vertical shaft (2), it being possible to slow the conveying movement of said gripping conveyor (1) to a standstill, and said conveying movement being harmonized with the rotation in a manner such that when the slowing-down ends, the centre of gravity of the product (A) is above the rotation axis, with the gripping conveyor (1) in the 90° position, wherein the conveying movement of the gripping conveyor (1) can be reversed after the standstill, and said gripping conveyor (1) can be rotated further, to the 180° position, and wherein means (20) of controlling the conveying movement and rotation of said gripping conveyor (1) are provided.

2. The conveying apparatus as claimed in claim 1, wherein the gripping conveyor (1) and the feeding conveyor (3, 18) can be driven at the same conveying speed.

3. The conveying apparatus as claimed in claim 1 or 2, wherein the gripping conveyor (1) comprises a lower transport belt (7) which can be driven so as to circulate endlessly, and further comprises an upper array of freely rotatable rollers (10), mounted in a structural component (14) which is freely slidable in the upward direction.

4. The conveying apparatus as claimed in claim 3, wherein the transport belt (7) and the structural component (14) carrying the rollers (10) are mounted on a common supporting frame (13) which can be rotated about a shaft (2).

5. The conveying apparatus as claimed in claim 3 or 4, wherein the vertical movement of the structural component (14) with the rollers (10) can be limited in the downward direction, according to the height of the current product (A), this movement limitation being effected by positioning means (15-17).

6. The conveying apparatus as claimed in any one of claims 1 to 5, wherein a belt conveyor (3) is located upline of the gripping conveyor (1) and is provided with an upper pressure roller (18) which can be drive-rotated and raised or lowered through the agency of control means (20).

7. The conveying apparatus as claimed in any one of claims 3 to 6, wherein the lower transport belt of the gripping conveyor (1) is configured as a toothed belt (7), its carrying side running between semicircular lateral supporting plates (8, 9).

## Revendications

1. Transporteur pour transférer par rotation des livres, des corps d'ouvrage, des brochures, des piles de cahiers, des piles de corps d'ouvrage ou des produits similaires, dans une position nouvelle, qui est disposé de préférence devant un dispositif d'empilement et qui comporte un dispositif de rotation enserrant les produits et permettant une rotation sélective de 180° *caractérisé par* un transporteur à serrage (1) qui prend les produits (A) en charge depuis un transporteur d'alimentation (3), (18) avec un effet de pression, qui peut pivoter de 180° autour d'un axe vertical (2) et dont le mouvement transporteur peut être ralenti jusqu'à l'arrêt complet et est synchronisé avec le mouvement de rotation de sorte qu'après achèvement du ralentissement, le centre dé gravité du produit (A) se trouve au-dessus de l'axe de rotation lorsque le transporteur à serrage (1) est en position de rotation de 90°, où le mouvement transporteur dudit transporteur à serrage (1) est réversible après l'arrêt complet et où son mouvement de rotation peut continuer jusqu'à atteindre 180° et où les mouvements transporteur et de rotation du transporteur à serrage (1) sont commandés par des moyens de commande (20).

2. Transporteur selon la revendication 1 *caractérisé en ce que* le transporteur à serrage (1) et le transporteur d'alimentation (3), (18) peuvent être entraînés à la même vitesse.

3. Transporteur selon les revendications 1 ou 2 *caractérisé en ce que* le transporteur à serrage (1) est constitué d'une courroie transporteuse (7) sans fin, disposée en bas, et, d'un groupe de poulies (10) disposées en haut, pouvant tourner librement et logées dans un support (14) qui est déplaçable librement vers le haut.

4. Transporteur selon la revendication 3 *caractérisé en ce que* la courroie transporteuse (7) et le support (14) logeant les poulies (10) sont disposés sur un cadre porteur (13) commun, mobile autour d'un axe (2).

5. Transporteur selon les revendications 3 ou 4 *caractérisé en ce que* le mouvement vertical du support (14) logeant les poulies (10) est limité vers le bas par des moyens de positionnement (15 à 17) en fonction de la hauteur du produit (A) concerné.

6. Transporteur selon les revendications 1 à 5 *caractérisé en ce que* en amont du transporteur à serrage (1) est disposée une bande transporteuse (3) avec un cylindre d'appui (18) supérieur pouvant être entraîné en rotation, abaissé et élevé par des moyens de commande (20).

7. Transporteur selon les revendications 3 à 6 *caractérisé en ce que* la courroie transporteuse inférieure du transporteur à serrage (1) est constitué d'une courroie dentée (7) dont la bande de travail se développe entre deux tôles d'appui (8), (9) latérales en forme de demi-lune.
